# EUROPEAN PATENT APPLICATION

(11) **EP 4 631 858 A1**
(43) Date of publication of application: **15.10.2025**
(21) Application number: 24305548.0
(22) Date of filing: 08.04.2024
(51) Int. Cl.: B64D 31/04, B64C 13/04

(54) **FLIGHT CONTROL SYSTEM**

(71) Applicant: Ratier-Figeac SAS, 46101 Figeac Cedex (FR)
(72) Inventor: ANTRAYGUE, Cedric, Figeac (FR)
(74) Representative: Dehns

(57) **Abstract**

A flight control system for an aircraft, the flight control system comprising a thrust lever configured to control a thrust magnitude for the aircraft during flight, the thrust lever in the form of a control stick that can be moved along a first direction to control the thrust magnitude, and wherein the thrust lever is also configured to control a yaw angle of the aircraft during flight, whereby the control stick, or at least a portion of the control stick, can be twisted to control the yaw angle of the aircraft.

## Description

### TECHNICAL FIELD

The present technology relates to aircraft flight control systems and in particular to an improved thrust lever.

### BACKGROUND

Various types of flight control systems are known to allow a pilot or crew to control, from the cockpit of an aircraft, the thrust output of the aircraft's engines and the movement of flight control surfaces such as wing flaps, slats, elevators, rudders, etc., to control rotation of the aircraft about its principal axes (i.e. the yaw (normal), pitch (lateral) and roll (longitudinal) axes of the aircraft).

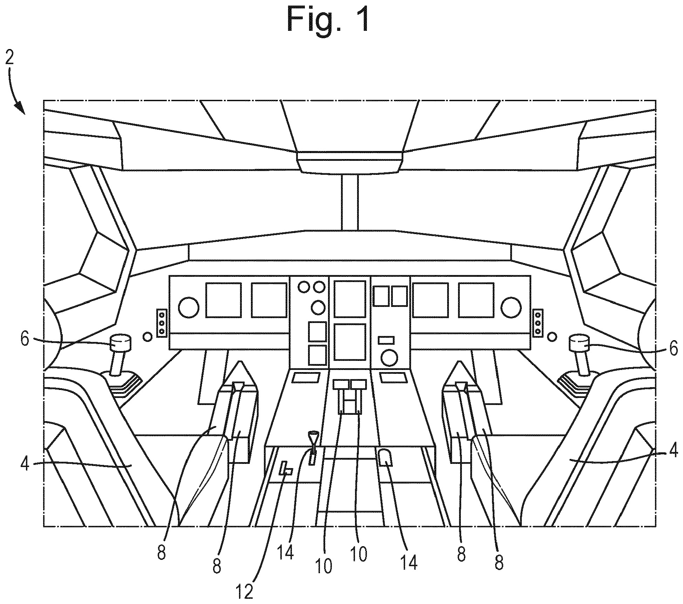

Figure 1 shows an example of a more traditional cockpit 2 in a civil airplane. The cocktpit 2 includes two sides, each configured to allow a pilot (or co-pilot) to sit and control the aircraft. Each side of the cockpit 2 includes a seat 4 and various controls to allow each pilot to control different aspects of the airplane (the various controls together defining a cockpit "inceptor" system).

As shown in Figure 1, the controls include a sidestick 6 which allows the pilot to control the roll and pitch of the airplane. At the pilots' feet there are two rudder pedals 8 which provide a foot-operated flight control interface for controlling the rudder of the airplane to allow the pilots to control the yaw angle of the airplane during flight. A separate tiller (not shown) may be used to control movement of the aircraft about the yaw axis during taxiing operations (e.g. by turning the nose wheel to steer the aircraft). A thrust lever 10 is provided on a central pedestal 12 of the cockpit 2. This allows the pilot to control the thrust magnitude (i.e. total thrust) generated by the airplane engines. There is also provided a spoiler lever 14 to control braking of the airplane.

In order to control movement of the aircraft about the yaw axis during flight (i.e., steering of the aircraft to the left or right), the pilot pushes the right or left rudder pedals 8 to a greater or lesser degree depending on the desired change of the yaw angle, where the right rudder pedal 8 causes the airplane to steer to the right, and the left rudder pedal causing the the aircraft to steer to the left. In order to change the thrust magnitude of the aircraft, the pilot pushes the thrust lever 10 forward or backwards. The further forwards that the pilot pushes the thrust lever 10, the higher the total thrust generated by the airplane engines. The sidestick 6 is located on an opposite side of the pilot to the thrust lever 10, and the pilot can rotate the sidestick 6 forward or backwards to change the pitch angle of the airplane and left or right to control the roll angle of the airplane.

The Applicants however believe that there remains scope for improved aircraft flight control systems.

### SUMMARY

According to a first aspect, there is provided a flight control system for an aircraft, the aircraft having a set of principle flight axes including a yaw axis, the flight control system comprising a thrust lever configured to control a thrust magnitude for the aircraft, the thrust lever in the form of a control stick that can be moved along a first direction to control the thrust magnitude, wherein the thrust lever is also configured to control movement of the aircraft about its yaw axis during flight and/or during taxiing, whereby the control stick, or at least a portion of the control stick, can be twisted to control movement of the aircraft about its yaw axis.

Thus, according to the present technology, a thrust lever is provided as part of a flight control system for an aircraft (e.g., and in particular, as part of a "cockpit inceptor" system), wherein the thrust lever is operable and configured to control the thrust magnitude for the aircraft (i.e. to control the thrust generated by the aircraft engine(s)). The thrust control can generally be achieved in any suitable and desired manner, e.g. by controlling the fuel flow to the aircraft engines, e.g. in the normal manner for such thrust control.

According to the present technology, however, the thrust lever is also operable and configured to control movement of the aircraft about its yaw axis. The thrust lever according to the present technology thus provides a single inceptor that unifies the thrust and yaw control of the aircraft. This then avoids the need for separate inceptor systems for thrust and yaw. For instance, since the thrust lever according to the present technology can also control movement of the aircraft about its yaw axis, this means that separate means for controlling yaw may not be needed, which contributes to reducing the weight of the aircraft and makes installation and maintenance of the aircraft easier.

For example, the rudder pedals that are used to control movement of the aircraft about its yaw axis during flight in more traditional flight control systems are particularly heavy and difficult to install and maintain because of their relatively inaccessible location. Thus, in embodiments, the thrust lever is configured to control movement of the aircraft about its yaw axis during flight, and the present technology may allow such rudder pedals to be removed (and this is done in embodiments).

(However, as will be mentioned further below, the thrust lever may be additionally/alternatively configured to control movement of the aircraft about its yaw axis during taxiing operations.)

Further, the thrust lever according to the present technology provides a particulary intuitive and simplified control. For example, the above movements of the thrust lever to control the thrust magnitude and yaw of the aircraft are particularly intuitive for a pilot, because it allows the pilot to essentially move the thrust lever in the direction in which they would like the aircraft to travel. It also allows a pilot to control both the thrust and yaw angle of the aircraft using one hand.

The present technology may therefore provide various benefits compared to other possible approaches.

Subject to the particular requirements of the present technology, the thrust lever, and control stick, may generally take any suitable and desired form.

The control stick may comprise a shaft that extends along a shaft axis (which may be substantially vertical when the control stick is in a neutral position). The control stick may be configured to rotate or pivot about a pivot point defining a first axis of rotation, the first axis of rotation being perpendicular to the axis of the control stick (i.e. the shaft axis), such that the control stick can be moved forward and backward along a first direction to control thrust. Alternatively, the control stick may be translated forward and backward along the first direction to control thrust. Various arrangements would be possible in this regard. The control stick, or the portion of the control stick, can also be twisted about the shaft axis or an axis parallel to the shaft axis. The shaft axis may be a central axis extending along the length of the control stick, e.g it may extend along a straight line extending between a top and bottom of the control stick. However, other arrangemnets may be possible and in generally the control stick may have any desired shape (e.g. it may be curved or bent).

As described above, the control stick, or at least a portion of the control stick, can be twisted (and it is this twisting motion that controls movement of the aircraft about its yaw axis during flight). For example, and in embodiments, the control stick, or twisteable portion thereof, may be twisted in a first, e.g. clockwise, direction to move the aircraft to the right, and twisted in a second, opposite, e.g. anti-clockwise, direction to move the aircraft to the left. This twisting may be performed in various ways, as desired.

The control stick may include a handle, wherein the handle can be twisted relative to the control stick to control the yaw angle of the aircraft. The control stick may also comprise at least one shaft, wherein the handle formed at a top end of the at least one shaft. Alternatively, or additionally, the control stick (itself) can be twisted about its axis to control the yaw angle of the aircraft.

The control stick can also be moved along a first direction to control the thrust magnitude. However, in embodiments, the control stick is constrained to move forward and backward along the first direction such that lateral movement of the control stick is prevented. That is, in embodiments, the control stick can be moved along the first direction (e.g by rotating, pivoting, translating or otherwise moving the control stick forward and backward along the first direction), and can also be twisted as described above, but is otherwise constrained in its degree of movement.

This avoids the thrust lever from becoming over-complicated, and ensures that the yaw motion can be controlled accurately by the pilot. Conversely, it has been found that if the thrust lever is free to have more degrees of freedom, for example if the thrust lever were able to be moved right and left to control another direction of movement of the aircraft (the roll angle, for example), then it may be more difficult to accurately control the yaw motion. The described thrust lever thus allows both the thrust and yaw to be controlled using one lever, without compromising on the ease-of-use of the thrust lever, and allows the pilot to control the thrust magnitude and movement of the aircraft about the yaw axis effectively and accurately.

Thus, in embodiments, the control stick can move in a first (central) direction, e.g. by rotating or pivoting the control stick about the first axis, but the control stick is prevented from being able to move in other (lateral) directions (so that movement is in embodiments constrained in this sense, e.g. in contrast to a joystick that can be moved freely about two-axes).

The thrust lever may be further operable to control braking of the aircraft during flight. This then avoids the need for a separate, dedicated braking control (such as a spoiler lever) within the cockpit, thus simplifying the controls for the pilot and making it easier for the pilot to brake the aircraft at the same time as changing the yaw angle, whilst also reducing the weight and complexity of the cockpit.

The control stick may comprise a finger operated stick (i.e. a lever operable by a user's finger, including the user's thumb) or slider that can be manipulated to control braking of the aircraft. Optionally, the finger operated stick may be a thumb stick (i.e. a lever operable by a users thumb). Thus, the finger stick or lever may generally be arranged on the control stick and designed either for operation by a user's finger or the user's thumb and various arrangements are contemplated in this respect. It has been found that the presence of the thumbstick or slider on the thrust lever to control braking does not interfere with the ease-of-use of the thrust lever to control the thrust magnitude and yaw angle. The thumbstick or slider may be provided, for example, on a or the handle of the thrust lever. The thumbstick or slider may be a first thumbstick or slider for controlling braking on a first side of the aircraft, and the control stick may further comprise a second thumbstick or slider for controlling braking on a second, opposite side of the aircraft. This additional functionality allows the pilot to use the same thrust lever to apply directional braking, for example if the pilot wishes to brake and steer the aircraft at the same time. The finger operated stick may be located on a side of the control stick, e.g. on a side of a handle of the control stick, such that it is appropriately located for a pilot to control the thumbstick with their thumb (the sideways direction being defined relative to the forwards/backwards directions which are defined along the first direction) (thus, the finger operated stick in embodiments is a thumb stick). Other arrangements would however also be possible.

The thrust lever in embodiments is also operable and configured to control steering of the aircraft during taxiing. That is, in embodiments, the same control stick can be used to control thrust and yaw (and optionally braking) during flight and also used to control thrust and yaw, i.e. steering, (and optionally braking) during taxiing operations. In embodiments where the thrust lever is configured to control braking during taxiing, the thrust lever may comprise a finger stick (or the finger stick of above), where the control system is configured such that movement of the finger stick causes braking (e.g. braking of the wheels and/or lifting of wing flaps) during taxiing.

The flight control system may thus, depending on whether the aircraft is taxiing or is in flight, cause the thrust lever to either control a first set of flight control operations for the aircraft when the aircraft is taxiing, or cause the thrust lever to control a second, different set of flight control operations for the aircraft when the aircraft is in flight. In some embodiments, the thrust lever may cause the thrust lever to control the same set of flight control operations. For example, in some embodiments a twisting motion of the thrust lever may cause simultaneous rotation of the nosewheel and the rudder. This system allows the pilot to continue using the same thrust lever once the aircraft has landed or before take-off without needing to change to a different control stick without the pilot needing to change to a different control stick or instruct the aircraft to function in a different mode for taxiing or flight since it carries this out automatically.

The flight control system may be configured to determine whether the aircraft is taxiing or is in flight can be performed in various manners. For example, this could be controlled manually by the pilot. Or, in embodiments, the flight control system may further comprise processing circuitry that is configured to determine whether the aircraft is taxiing or is in flight. The flight control system can then convert the control stick movement to suitable commands for controlling the desired systems depending on whether the aircraft is taxiing or is in flight.

Thus, in embodiments, the same control stick is operable both to control yaw (i.e. steering) during taxiing and to control yaw during flight. In embodiments, the same (twisting) control stick action that is used to control yaw is also used to control steering. Thus, in such an embodiment, when the aircraft is taxiing, twisting the control stick, or at least the portion of the control stick, may actuate rotation of a nosewheel of the aircraft to control steering of the aircraft, whereas when the aircraft is in flight, twisting the control stick, or at least the portion of the control stick, may actuate one or more flight control surfaces to control the yaw angle of the aircraft. Alternatively or additionally, twisting the control stick during flight and/or during taxiing can cause engines on each side of the aircraft to output a differential thrust (such that one side of the engine produces a different thrust to the other side of the aircraft) in order to control yaw of the aircraft. This functionality may be employed during normal flight or, for example, if the event that the rudder (for example the rudder actuator) fails. This system allows the thrust lever to be used to control steering of the aircraft during taxiing, and further contributes to the simplicity of the cockpit and an improved experience for the pilot because, once again, this motion is intuitive and allows the pilot to control movement of the aircraft during taxiing using one lever. This may then remove the need for a separate, dedicated steering control (such as a tiller), thus further improving the simplicity of the cockpit and reducing weight of the aircraft.

In some embodiments, the control stick is only configured to control movement of the aircraft about its yaw axis during such taxiing operations (in which case separate control may still be provided for controlling yaw during flight). It will be appreciated that this still provides advantages in terms of unifying the thrust and steering control, e.g. as described above.

The flight control system may in general be used for any suitable and desired aircraft. The present technology thus also extends to an aircraft including the flight control system of any of the above. The aircraft may be a airplane (i.e. a fixed-wing aircraft), in particular an airliner. Thus, the airplane may comprises two wings and at least one gas turbine engine on each wing, where each gas turbine engine is rigidly fixed to (and unable to rotate/move relative to) each wing. The control system may be particularly suited for controlling an airplane (and particularly an airliner). This is at least in part because a pilot is able to easily control the thrust magnitude and yaw angles accurately using the thrust lever without any risk of inadvertently changing the roll or pitch angles of the aircraft. In an airplane (and in particular an airliner) it is common for a pilot to wish to change the thrust magnitude and yaw angle without necessarily wanting to change other directions of movement (for example the roll or pitch angles), because when flying an airplane (and particularly an airliner) it is often desired to maintain a near-constant optimal altitude throughout the majority of the flight time whilst still wishing to be able to accurately control the direction of travel of the aircraft to follow the desired route.

The thrust lever may thus provide input to the flight control system to allow the pilot to control the aircraft as desired. For example, the forward/backward movement of the thrust lever may provide a primary input to control thrust and the twisting may provide a secondary input to control yaw. Depending on these inputs suitable commands may then be (and are) generated to control movement of the aircraft. This control may be performed directly, e.g. by commanding an increase in engine thrust and/or moving one or more flight control surfaces, or the commands may be input to a suitable electronic interface (e.g. of a 'fly by wire' system) that processes the commands and determines the appropriate control actions to be performed. Thus, the flight control system may further comprise suitable control circuitry that is operable to translate the inputs provided by the pilot using the thrust lever into suitable commands for controlling the aircraft. As mentioned above the control circuitry may be implemented (electro)mechanically or electronically, e.g. in the normal manner for aircraft flight control systems, and various arrangements would be possible in this regard as known in the art. That is, the technology described herein relates particularly to the form of the thrust lever and the thrust lever may generally be integrated into any suitable flight control system (for any aircraft) as desired.

The present technology also extends in a further aspect to a thrust lever for use with a flight control system or an aircraft according to any of the above. The thrust lever is in the form of a control stick that can be moved along a first direction to provide a first input (e.g. to control a thrust magnitude of the aircraft), and the thrust lever is also configured to provide a second input (e.g. to control yaw of the aircraft), whereby the control stick, or at least a portion of the control stick, can be twisted to provide the second input.

In embodiments, the control stick may be constrained to move forward and backward along the first direction such that lateral movement of the control stick is prevented. The control stick may include a handle, wherein the handle can be twisted relative to the control stick to control the second input, or the control stick can be twisted to control the second input. The control stick may further comprise a finger (e.g thumb) operated stick or slider that can be manipulated to provide a third or further input (e.g. to control braking of the aircraft).

As will be appreciated by those skilled in the art, the thrust lever according to this further aspect can and in embodiments does include any one or more or all of features of the present technology described herein, as appropriate.

### BRIEF DESCRIPTION OF THE DRAWINGS

Various embodiments will now be described, by way of example only, and with reference to the accompanying drawings in which:
Figure 1 shows an example of a more traditional airplane cockpit;
Figure 2 shows a perspective view of an improved thrust lever, with the thrust lever in a neutral position;
Figure 3 shows a perspective view of the thrust lever shown in Figure 2, with the thrust lever being twisted to cause a change in yaw angle of the aircraft;
Figure 4 shows a top view of the thrust lever shown in Figures 2 and 3 with the thrust lever in a neutral position; and
Figure 5 shows a top view of the thrust lever shown in Figures 2 to 4 with the thrust lever being twisted to cause a change in yaw angle of the aircraft.

### DETAILED DESCRIPTION

The present technology relates to aircraft flight control systems. Figure 1 shows an example of a flight control system within a more traditional cockpit 2 in a civil airplane. As will be appreciated from Figure 1, the more traditional cockpit 2 shown in Figure 1 includes many moving parts, is relatively complicated to install and is not particularly intuitive for a pilot. Further, the rudder pedals 8 are relatively heavy and difficult to access for installation and maintenance. It is therefore desired to provide an improved flight control system.

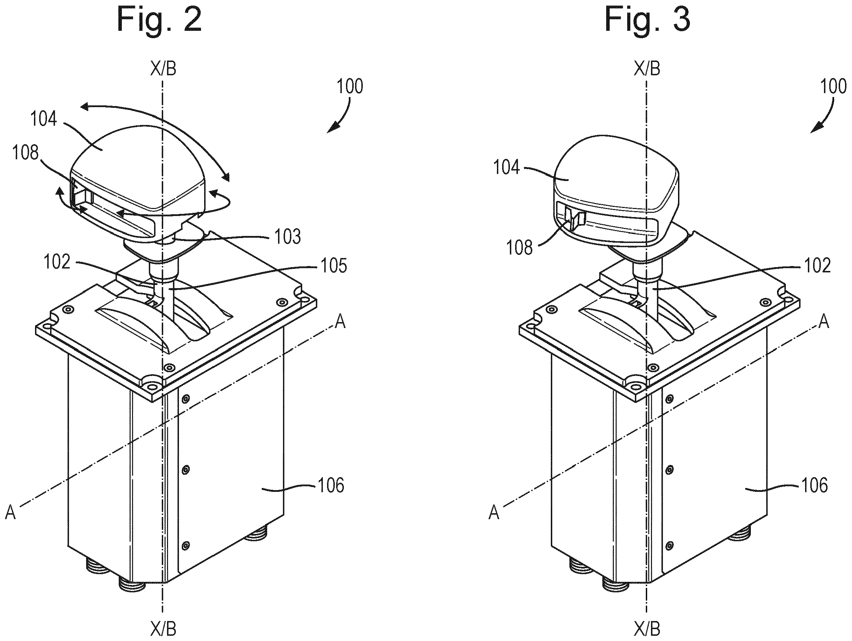

Figures 2 and 3 illustrate an embodiment of an improved thrust lever 100 according to the technology described herein. As shown, the thrust lever 100 is in the form of a control stick comprising a shaft 102 and a handle 104 located at a top end of the shaft 102. A bottom end of the shaft 102 is attached to a base 106 in such a manner that the control stick can be rotated forward and backward along a first direction, as will be explained further below. The illustrated thrust lever 100 extends generally vertically along a central axis X when the thrust lever 100 is in a neutral position. The base 106 is configured to be installed into a central pedestal of a cockpit of an aircraft.

As the arrows in Figure 2 illustrate, the attachment of the shaft 102 to the base 106 allows the shaft 102 to rotate about a first axis A which is perpendicular to the central axis X of the thrust lever 100. This allows the pilot to rotate the shaft 102 forwards and backwards when the thrust lever 100 is installed in the cockpit (the forward and backwards directions defined relative to a front and back of the aircraft). During flight, the pilot can grip the handle and push the thrust lever 100 forwards to increase the thrust magnitude (i.e. total thrust) of the aircraft and pull it backwards to decrease the thrust magnitude of the aircraft.

As illustrated in Figures 2 and 3, the handle 104 of the thrust lever 100 is configured to be twisted about a second axis B which is in line with the central axis X of the thrust lever 100. In this embodiment, the handle 104 is attached to an inner portion 103 of the shaft 102 which is received within an outer sleeve 105 of the shaft 102. When the handle 104 of the thrust lever 100 is twisted, this causes the inner portion 103 of the shaft 102 to twist within the outer sleeve 105. This movement allows the pilot to control yaw (e.g. a yaw angle) of the aircraft during flight, as explained in more detail below.

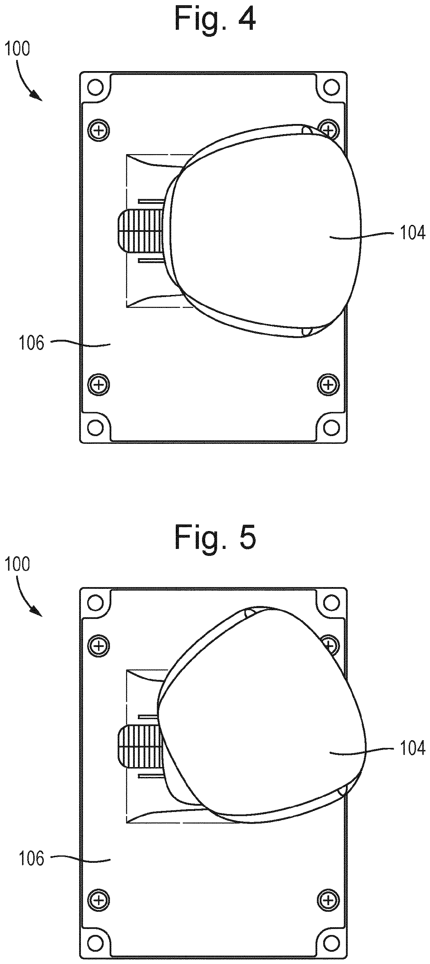

Figures 4 and 5 illustrate a top view of the thrust lever 100 of Figures 2 and 3. As illustrated, in order to cause the aircraft to rotate anti-clockwise about its yaw axis, i.e. so that the aircraft nose turns to the left, the pilot can grip the handle and twist the handle from its neutral position (which is illustrated in Figures 2 and 4) in an anti-clockwise direction to the position illustrated in Figures 3 and 5. When the handle 104 has been rotated to the position shown in Figures 3 and 5, this causes the aircraft to carry out the actions necessary to change the yaw angle of the aircraft to cause the aircraft to turn left, for example by adjusting the relative thrusts of the gas turbine engines on each side of the aircraft and/or by adjusting the rudder of the aircraft. The greater the angle to which the pilot twists the handle 104 from the neutral position, the greater the rotation about the yaw axis. For example, if the pilot twists the handle from its neutral position to five degrees clockwise, this will cause the yaw angle of the aircraft to change gradually so that the aircraft turns to the right until the handle is released back to the neutral position. If the pilot instead twists the handle from its neutral position to twenty degrees clockwise, for example, this will cause the yaw angle of the aircraft to change more quickly so that the aircraft turns right relatively steeply until the handle is released back to the neutral position. The thrust lever 100 may be configured to spring back to the neutral position when a twisting force is no longer applied to the handle, or alternatively the thrust lever 100 may be configured to stay in a particular position when it is released.

The thrust lever 100 is configured to rotate about the first and second axes A, B simultaneously. This allows the pilot to simultaneously control the thrust magnitude and rotation about the yaw axis of the aircraft during flight using the same lever. For example, in order to increase the speed of the aircraft and to change the yaw angle to turn the aircraft right, the pilot can grip the handle of the thrust lever 100, push the handle forwards and at the same time twist the handle clockwise. The motion necessary to control the thrust lever 100 is much more intuitive for the pilot than conventional arrangements, because the pilot is in essence moving the handle in the direction in which they would like the aircraft to travel.

The thrust lever 100 can be part of a flight control system comprising processing circuitry (no shown). The processing circuity is configured to actuate the changes to the aircraft necessary to cause the desired change in the thrust magnitude and yaw angle of the aircraft in response to movement of the thrust lever.

The handle illustrated has been designed to be ergomonic and easy to grip for the pilot, whilst allowing the pilot to easily identify in which direction the handle is facing. The illustrated handle is generally flat and has a generally trapezoidal cross sectional shape, although other shapes may be provided.

As shown in Figures 2 and 3, the thrust lever 100 also comprises a finger operated stick 108. The finger operated stick 108 in this embodiment is provided on a side of the handle. The finger operated stick 108 is a lever provided on the handle which can be moved by a user's finger (including their thumb) to control braking of the aircraft during flight. For example, if the pilot wishes to increase braking of the aircraft during aircraft descent, the pilot pushes the finger operated stick 108 forwards. As illustrated by the arrow in Figure 2, the finger operated stick 108 is rotatable forwards and backwards relative to the thrust lever 100 about a pivot axis. The aircraft flight control system will then carry out the actions necessary to reduce the speed of the aircraft, for example by lifting spoilers on the wings.

In embodiments (not illustrated), the thrust lever may further comprise further switches which may be included on the handle, for example the handle may comprise a TOGA (take off go arround) switch and/or an AT (autothrottle) engage/disengage switch and/or a rudder trim switch and/or a rudder trim reset switch.

As explained above, the thrust lever 100 is configured such that the shaft 102 can be moved forwards and backwards and twisted. The thrust lever 100 is constrained so that it cannot move laterally (i.e. left or right). This avoids the thrust lever 100 from becoming over-complicated, and ensures that the yaw angle can be controlled accurately by the pilot. The described thrust lever 100 allows both the thrust and yaw angle to be controlled using one lever, without compromising on the ease-of-use of the thrust lever 100 and to allow the pilot to control the thrust magnitude and yaw axis effectively and accurately. It has also been found that the presence of the finger operated stick 108 to control braking does not interfere with the ease-of-use of the thrust lever 100, and this further simplifies the cockpit because it allows the spoiler lever to be removed.

As explained above, the described thrust lever 100 is particularly intuitive for a pilot to use. The thrust lever 100 also allows the rudder pedals and spoiler lever to be removed from the cockpit. This contributes to reducing the weight of the aircraft and makes installation and maintenance easier. The rudder pedals are particularly heavy and difficult to install and maintain because of their relatively inaccessible location, so their removal is particularly desirable.

The described thrust lever 100 can also be used to control the thrust magnitude and steering (i.e. yaw) of the aircraft when the aircraft is taxiing. The processing circuitry of the aircraft (not shown) may be configured to determine whether the aircraft is taxiing or in flight. When it has been determined that the aircraft is taxiing, the processing circuity can convert movement of the thrust lever 100 into appropriate operations in order to control the thrust magnitude, steering and braking of the aircraft when the aircraft is taxiing.

For example, movement of the finger operated stick 108 may cause braking of the wheels (rather than lifting of the wing spoilers, as would occur during flight). Steering of the aircraft can be controlled by providing differential thrusts to the engines on each side of the aircraft and/or by rotating a nose wheel actuator to change the direction of the nose wheel and/or by providing differential braking to the wheels, rather than by only controlling the rudder of the aircraft (as during flight). In this example, the thrust lever 100 can be used to control steering of the aircraft during taxiing, and further contributes to the simplicity of the cockpit and an improved experience for the pilot because, once again, this motion is intuitive and allows the pilot to control movement of the aircraft during taxiing using one lever. That is, the same thrust lever 100 can be used both during flight and during taxiing (whereas in more traditional flight control systems, a separate dedicated tiller (not shown in Figure 1) may be provided for steering during taxiing, which tiller can therefore be removed).

In some examples, the processing circuitry can be configured to actuate differential braking (where the amount of braking is different on each side of the aircraft) during taxiing when the finger operated stick is moved and the handle is simultaneously twisted in order to cause the aircraft to brake and steer at the same time. For example, if the aircraft is taxiing (and for example is travelling at a relatively low speed) and the pilot twists the thrust lever 100 clockwise and simultaneously pushes the finger operated stick, the aircraft can apply more braking on the right than the left, causing the aircraft to both brake and turn right. In other examples this functionality is omitted.

In another embodiment (not shown) there may be two finger operated sticks, one on each side of the handle. This can be used by the pilot to set the right/left braking balance when the aircraft is taxiing. For example, if the pilot pushes the finger operated stick on the right of the handle but not the finger operated stick on the left of the handle, then braking will be applied on the right of the aircraft but not the left (by any appropriate method). This causes the aircraft to both slow down and turn right simultaneously. In a yet further embodiment, the two finger operated sticks may be on one side of the handle.

Compared to the more traditional flight control system shown in Figure 1, the thrust lever according to the technology described herein may therefore faciliate an improved flight control system, e.g. that is more intuitive to use, since the rudder pedal function can be replaced with a unified control stick that is operable and configured to control both thrust output and yaw angle (and also braking) in a more user-friendly manner. This in turn may also allow a simplification of the flight control system since the rudder pedals can in embodiments be removed. Embodiments may thus also simplify installation/maintenance of the flight control system and also faciliate a reduction in weight associated with the flight control system.

Although the present technology has been described above with reference to various embodiments, it will be understood by those skilled in the art that various changes in form and detail may be made without departing from the scope of the the accompanying claims.

## Claims

1. A flight control system for an aircraft, the aircraft having a set of principle axes including a yaw axis, and the flight control system comprising:
a thrust lever configured to control a thrust magnitude for the aircraft during flight, the thrust lever in the form of a control stick that is movable along a first direction to control the thrust magnitude, and
wherein the control stick is also configured to control movement of the aircraft about its yaw axis during flight and/or during taxiing, whereby the control stick, or at least a portion of the control stick, is configured to be twisted to control movement of the aircraft about its yaw axis.

2. The flight control system of claim 1, wherein the control stick is constrained to move forward and backward along the first direction such that lateral movement of the control stick is prevented.

3. The flight control system of claim 1 or 2, wherein the control stick includes a handle, wherein the handle is configured to be twisted relative to the control stick to control movement of the aircraft about its yaw axis.

4. The flight control system of claim 1 or 2, wherein the control stick is twistable to control movement of the aircraft about its yaw axis.

5. The flight control system of any preceding claim, wherein the control stick is further operable to control braking of the aircraft during flight.

6. The flight control system of claim 5, wherein the control stick comprises a finger operated stick or slider that can be manipulated to control braking of the aircraft.

7. The flight control system of claim 6, wherein the finger operated stick or slider is a first finger operated stick or slider for controlling braking on a first side of the aircraft, and wherein the control stick further comprises a second finger operated stick or slider for controlling braking on a second, opposite side of the aircraft.

8. The flight control system of any preceding claim, wherein the flight control system is configured, in response to twisting movement of the thrust lever, to control movement of the aircraft about its yaw axis by actuating rotation of a nosewheel of the aircraft.

9. The flight control system of any preceding claim, wherein the flight control system is configured, in response to twisting movement of the thrust lever, to control movement of the aircraft about its yaw axis by:
actuating one or more flight control surfaces to control the yaw of the aircraft; and/or
actuating differential thrust from each side of the aircraft in response.

10. An aircraft including the flight control system of any preceding claim.

11. The aircraft of claim 10, wherein the aircraft is an airplane, in particular an airliner.

12. A thrust lever for use with a flight control system as claimed in any of claims 1 to 9 or an aircraft as claimed in claim 10 or 11, the thrust lever in the form of a control stick that is configured to be moved along a first direction to provide a first input, and wherein the thrust lever is also configured to provide a second input, whereby the control stick, or at least a portion of the control stick, is configured to be twisted to provide the second input.

13. The thrust lever of claim 12, wherein the control stick is constrained to move forward and backward along the first direction such that lateral movement of the control stick is prevented.

14. The thrust lever of claim 12 or 13, wherein:
the control stick includes a handle, wherein the handle is configured to be twisted relative to the control stick to control the second input; or
wherein the control stick itself is twistable to control the second input.

15. The thrust lever of any of claims 12 to 14, wherein the control stick further comprises a finger operated stick or slider that can be manipulated to provide a third or further input.
